# EUROPÄISCHE PATENTSCHRIFT

(11) **EP 1 023 614 B1**
(45) Veröffentlichungstag und Bekanntmachung des Hinweises auf die Patenterteilung: **09.02.2005**
(21) Anmeldenummer: 98956811.8
(22) Anmeldetag: 06.10.1998
(51) Int. Cl.: G01T 1/10, G01T 1/06

(54) **DOSIMETER ZUR ERFASSUNG VON STRAHLUNG UNTER AUSNUTZUNG DER RADIO-PHOTO-LUMINESZENZ**
DOSIMETER FOR DETECTION OF RADIATION USING RADIO-PHOTO-LUMINESCENCE
DOSIMETRE POUR LA DETECTION DE RAYONNEMENTS UTILISANT LA RADIO-PHOTO-LUMINESCENCE

(30) Priorität: 14.10.1997 DE 19745302
(43) Veröffentlichungstag der Anmeldung: 02.08.2000
(73) Patentinhaber: Beckers, Ulf, 25596 Wacken (DE)
(72) Erfinder: Beckers, Ulf, 25596 Wacken (DE)
(74) Vertreter: Krause, Wolfgang, Dr.-Ing., Dipl.-Ing.
(86) Internationale Anmeldenummer: PCT/DE1998/002993
(87) Internationale Veröffentlichungsnummer: WO 1999/019746

(56) Entgegenhaltungen:
- EP-A- 0 329 131
- FR-A- 2 508 187
- US-A- 5 596 202

## Beschreibung

Die Erfindung betrifft Dosimeter zur Erfassung von Strahlung unter Ausnutzung der Radio-Photo-Lumineszenz bestehend aus einem Phosphatglaskörper, der sich in einer Halterung oder in einem Gehäuse befindet.

Dosimeter bekannter Bauart bestehen aus einem Glaskörper, der Bereiche mit einer Substanz für die nachzuweisende Strahlung aufweist.
Der Glaskörper ist mit einer Hülle, einer Halterung, einem Gehäuse oder einem Rahmen versehen, der gleichzeitig als Träger einer Codierung fungiert. Derartige Lösungen sind unter anderem in der DE 39 03 113 A1 (Personendosimeter im Strahlenschutzbereich), der DE 40 29 036 A1 (Halterung für kristallines Thermo-Lumineszenz-Detektormaterial) und der DE 41 05 126 A1 (Codiertes Festkörperdosimeter) aufgeführt. Diese Dosimeter sind durch eine Trennung des Glaskörpers und der Hülle, der Halterung, dem Gehäuse oder dem Rahmen manipulierbar.
Aus der GB-A-1 014 839 ist ein Dosimeter bekannt, in dessen Phosphatglaskörper Silberionen platziert sind, welche als Fluoreszenzzentren wirken.
Vorrichtungen zum Bestimmen der Dosis von Dosimetern sind unter anderem in den Schriften EP 0 329 131 (Gerät zur Messung von Strahlendosen mit Fluoriszenzglasdosimetern), wobei über ein Blendensystem das Dosimeter durch die Bestrahlung mit UV- Licht angeregt wird, EP 0 418 587 (Gerät zur Messung der Strahlendosis eines Fluoreszenzglasdosimeters), bei der die Dosimeter aus einem Magazin nacheinander in den Strahlengang einer Lichtquelle platziert werden und GB-A-1014 839 (Dosimeter-Mess-Apparat), wobei das Dosimeter zwischen zwei Positionen bewegbar ist, veröffentlicht.
Ein gleichzeitiges Bestimmen der Dosis und der Codierung des Dosimeters ist mit derartigen Lösungen nicht möglich.

Der in den Patentansprüchen 1, 4 und 5 angegebenen Erfindung liegt die Aufgabe zugrunde, energiereiche Strahlung durch ein Dosimeter zu erfassen und derartige Dosimeter herzustellen.

Diese Aufgabe wird mit den in den Patentansprüchen 1, 4 und 5 aufgeführten Merkmalen gelöst.

Das Dosimeter zum Erfassen von Strahlung zeichnet sich vor allem durch seine einfache und gleichzeitig multifunktionale Realisierung aus.

Zum Ersten sind Metallatome in einem Bereich eines Phosphatglaskörpers platziert. Der Einfluss energiereicher Strahlung führt dazu, dass ein Elektron oder mehrere Elektronen des Metallatoms aus dem Valenzband oder tieferen lokalisierten Zuständen in höhere diskrete Zustände überführt werden. Die Anzahl der Metallatome in einem höheren energetischen Zustand stellen dabei ein direktes Maß der auf das Dosimeter und damit gleichzeitig auf die das Dosimeter tragende Person eingewirkten energiereichen Strahlung dar. Ein Energieaustausch benachbarter Metallatome wird durch eine weitestgehend räumliche Trennung der Metallatome eingeschränkt.

Zum Zweiten sind Metallatome verschiedener Sorten in den Phosphatglaskörper platzierbar. Mit einem Dosimeter sind dabei gleichzeitig mehrere energiereiche Strahlungsarten nachweisbar.

Zum Dritten besitzt der Phosphatglaskörper des Dosimeters eine Codierung, so dass neben der Erfassung der Dosis einer oder mehrerer energiereicher Strahlungen bei der Auswertung gleichzeitig eine personelle Zuordnung der Messergebnisse stattfindet.

Die Verfahren zur Herstellung derartiger Dosimeter zeichnen sich besonders dadurch aus, dass durch die Verwendung des Verfahrens der Ionenimplantation Metallionen oder Metallatome einer oder mehrerer Sorten in einem Phosphatglaskörper platziert werden. Die Anwendung des Verfahrens der Ionenimplantation gewährleistet, dass sich die Metallionen oder Metallatomen auf einzelnen Positionen im Phosphatglaskörper befinden. Dabei wird weitestgehend verhindert, dass ein Energieaustausch benachbarter Metallatome stattfindet.

Die Verfahren unterscheiden sich in der Realisierung der Codierung voneinander.

Im ersten Fall wird nach der Ionenimplantation eine Oberfläche des Phosphatglaskörpers mit einer optisch dichten Schicht versehen. Eine nachfolgende Strukturierung in punkt- und/oder balkenförmige Teilflächen bildet die Codierung. Die Anzahl, die Größe und/oder die Position der Teilflächen unterscheiden sich dabei von Dosimeter zu Dosimeter. Damit ist eine einfache Form der Codierung gegeben. Diese zeichnet sich weiterhin durch eine einfache Lesbarkeit aus. Eine Umsetzung in entsprechende digitale oder analoge Signale ist durch bekannte optische Einrichtungen leicht möglich.

Im zweiten Fall wird nach der Ionenimplantation eine Oberfläche mit trichter- und/oder grabenförmigen Vertiefungen versehen. Durch eine Bestrahlung mit Licht aus einer Richtung sind unterschiedliche Brechungswinkel für das einfallende Licht vorhanden, so dass daraus Helligkeitsunterschiede resultieren. Die Anzahl, die Größe und/oder die Position der trichter- und/oder grabenförmigen Vertiefungen unterscheiden sich von Dosimeter zu Dosimeter, so dass damit eine Codierung gegeben ist. Dieses Verfahren zeichnet sich besonders durch seine einfache Realisierung aus. Ohne technologische Zwischenschritte wird die Codierung sofort auf einer Oberfläche geschaffen. Damit ist dieses Verfahren besonders für eine Fertigung größerer Stückzahlen von Dosimetern geeignet. Ein weiterer Vorteil besteht darin, dass keine zusätzlichen Stoffe für die Realisierung einer Codierung notwendig sind.

Vorteilhafte Ausgestaltungen der Erfindung sind in den Patentansprüchen 2 und 3 angegeben.

Die Anwendung des Verfahrens der Ionenimplantation nach der Weiterbildung des Patentanspruchs 2 stellt eine einfache Form der für das Platzieren der Metallatome oder Metallionen dar. Die technologischen Grundlagen dieses Verfahrens sind bekannt, so dass ein ökonomisch günstig herstellbares Dosimeter zur Verfügung steht. Mit der Verwendung des Verfahrens der Ionenimplantation wird insbesondere erreicht, dass sich die Metallatome auf einzelnen oder überwiegend einzelnen Positionen im Phosphatglaskörper befinden, so dass die benachbarten Metallatome ihre Energie nicht austauschen können. Die Information des Dosimeters bleibt erhalten.

Eine vorteilhafte Ausgestaltung einer Codierung des Dosimeters ist in der Weiterbildung des Patentanspruchs 3 aufgeführt.

Ausführungsbeispiele der Erfindung werden im folgenden näher beschrieben.

Ein Dosimeter zur Erfassung von Strahlung unter Ausnutzung der Radio-Photo-Lumineszenz mit einer Identifikation besteht in einem ersten Ausführungsbeispiel aus einem plattenförmigen Phosphatglaskörper. Mit dem Verfahren der Ionenimplantation sind in diesen Silberatome eingebracht. Das Verfahren der Ionenimplantation führt dazu, dass sich einzelne Silberatome im Phosphatglaskörper befinden. Ein Energieaustausch benachbarter Silberatome wird weitestgehend vermieden, so dass die Information des Dosimeters erhalten bleibt. Weiterhin sichert dieses Verfahren bei der Herstellung der Dosimeter gleichbleibende Eigenschaften.
Eine Oberfläche des Phosphatglaskörpers besitzt eine Codierung. Diese besteht aus einer optisch dichten Schicht. Eine derartige Schicht besteht z.B. aus einem aufgedampften Metall. Diese Schicht ist so strukturiert, dass punkt- und/oder balkenförmige Gebiete vorhanden sind. Die Position und/oder die Größe dieser Gebiete stellen die Codierung der Dosimeter dar. Damit ist eine Zuordnung zu personenbezogenen Daten gegeben, die bei der Erfassung und Auswertung der Höhe der Strahlungsaufnahme des Dosimeters gleichzeitig erfolgt. Die Oberfläche oder die Oberflächen mit den Metallatomen oder Metallionen besitzt oder besitzen eine Schutzschicht.

Ein Dosimeter zur Erfassung von Strahlung unter Ausnutzung der Radio-Photo-Lumineszenz mit einer Identifikation besteht in einem zweiten Ausführungsbeispiel aus einem stabförmigen Phosphatglaskörper mit quadratischem Querschnitt. Durch die Anwendung des Verfahrens der Ionenimplantation ist dieser Phosphatglaskörper mit mehreren Metallatomen verschiedener Sorten versehen. Jede der vier umlaufenden gleich großen Oberflächen des stabförmigen Phosphatglaskörpers weist Metallatome verschiedener Sorten auf. Damit sind mit einem derartigen Dosimeter unterschiedliche Strahlungsarten nachweisbar.
Das Verfahren der Ionenimplantation führt dazu, dass sich einzelne Metallatome oder Metallionen im Phosphatglaskörper befinden. Dabei wird weitestgehend gewährleistet, dass die benachbarten Metallatome ihre Energie nicht ausgleichen können. Eine Stirnfläche des stabförmigen Phosphatglaskörpers, die keine Metallatome aufweist, besitzt eine Codierung. Diese besteht aus trichterförmigen Vertiefungen, die mittels Laserstrahlen eingebracht sind. Die Position und/oder die Größe der Vertiefungen stellt die Codierung des Dosimeters dar und wird personenbezogenen Daten zugeordnet. Diese unterscheidet sich bei den einzelnen Dosimetern. Die andere Stirnfläche des stabförmigen Phosphatglaskörpers bleibt unbeeinflusst. Diese dient dem Eintritt des Lichtstrahls zur Bestimmung der Höhe der auf das Dosimeter eingewirkten Strahlungsarten. Damit erfolgt beim Bestimmen der Strahlungsdosis gleichzeitig die Zuordnung zu personenbezogenen Daten, so dass dafür nur ein Bewertungsvorgang notwendig ist.
Die Oberflächen des Phosphatglaskörpers sind mit einer Schutzschicht versehen.

Ein Dosimeter zur Erfassung von Strahlung unter Ausnutzung der Radio-Photo-Lumineszenz mit einer Identifikation besteht in einem dritten Ausführungsbeispiel aus einer Phosphatglasfaser. Diese besitzt Metallatome, die beim Ziehen aus der Glasschmelze in diese eingebracht sind. Dazu wurde die Glasschmelze mit Silberatomen versehen.
Eine der kreisförmigen Grundflächen der Phosphatglasfaser dient der Einkopplung des Lichtes.
Die Codierung besteht aus trichterförmigen Vertiefungen, die auf der Manteloberfläche der Phosphatglaskörper eingebracht sind. Deren Position stellt die Codierung dar.

Damit ist eine Zuordnung zu personenbezogenen Daten gegeben, die bei der Erfassung und Auswertung der Höhe der Strahlungsaufnahme des Dosimeters gleichzeitig erfolgt. Weiterhin besitzt die Mantelfläche der Phosphatglasfaser eine Schutzschicht.

Die beschriebene Codierung der Ausführungsbeispiele eins bis drei ist natürlich auf einem der Phosphatglaskörper der Ausführungsbeispiele eins bis drei anwendbar. Weiterhin können die beschriebenen Dosimeter des ersten Ausführungsbeispiels neben den aufgeführten Silberatomen auch mit Metallatomen eines oder mehrerer Sorten versehen sein.

Ein Verfahren zur Herstellung von Dosimetern zur Erfassung von Strahlung unter Ausnutzung der Radio-Photo-Lumineszenz mit einer Identifikation ist nachfolgend als viertes Ausführungsbeispiel aufgeführt.
Im ersten Verfahrensschritt wird ein Phosphatglaskörper durch Ionenimplantation mit Metallionen oder durch Ionenimplantation mit gleichzeitiger Neutralisation mit Metallatomen bestrahlt. Damit werden Metallatome in einem Bereich des Phosphatglaskörpers platziert.
Im zweiten Verfahrensschritt wird eine Oberfläche des Phosphatglaskörpers mit einer optisch dichten Schicht versehen. Dazu wird diese Oberfläche zum Beispiel mit einem Metall bedampft. Diese Schicht bildet die Grundlage für eine Codierung.
Im dritten Verfahrensschritt werden Flächenteile der Schicht so abgetragen, dass punktund/oder balkenförmige Flächen stehenbleiben. Die Position und/oder die Größe dieser Flächen unterscheiden sich von Phosphatglaskörper zu Phosphatglaskörper, so dass eine Zuordnung erfogen kann. Das Abtragen dieser Flächenteile erfolgt mittels gezielter Laserbestrahlung, so dass diese Schicht verdampft.
In einem abschließenden Verfahrensschritt werden die Oberflächen des Phosphatglaskörpers mit einer mechanischen Schutzschicht versehen.

Ein Verfahren zur Herstellung von Dosimetern zur Erfassung von Strahlung unter Ausnutzung der Radio-Photo-Lumineszenz mit einer Identifikation ist nachfolgend als fünftes Ausführungsbeispiel aufgeführt.
Im ersten Verfahrensschritt wird mindestens ein Bereich eines Phosphatglaskörper mit Metallionen durch Ionenimplantation oder mit Metallatomen durch Ionenimplantation mit Neutralisation versehen.
Im zweiten Verfahrensschritt wird eine Oberfläche des Phosphatglaskörpers gezielt mit Laserstrahlen so aufgeschmolzen, dass trichterförmige Vertiefungen in dieser Oberfläche entstehen. Die Position und/oder die Größe der Vertiefungen ist die Codierung des Dosimeters. Diese unterscheiden sich bei den einzelnen Dosimetern.
In einem abschließenden Verfahrensschritt werden die Oberflächen des Phosphatglaskörpers mit einer mechanischen Schutzschicht versehen.

## Patentansprüche

1. Dosimeter zur Erfassung von Strahlung unter Ausnutzung der Radio-Photo-Lumineszenz mit einer Identifikation bestehend aus einem Phosphatglaskörper, der sich in einer Halterung oder in einem Gehäuse befindet, und bei dem mindestens in einem Bereich des Phosphatglaskörpers Fluoreszenzzentren erzeugende Metallatome oder Metallionen im Phosphatglaskörper platziert sind, **dadurch gekennzeichnet, dass** mindestens ein Bereich des Phosphatglaskörpers entweder eine auf eine Oberfläche aufgebrachte und eine punkt- und/oder balkenförmige Struktur aufweisende Schicht oder eingebrachte Vertiefungen als eine durch optische Bestrahlung mit einer Lichtquelle bestimmbare und der Identifikation dienende Codierung besitzt.

2. Dosimeter nach Patentanspruch 1, **dadurch gekennzeichnet, dass** das ionenimplantierte Metallatome oder Metallionen sind.

3. Dosimeter nach Patentanspruch 1, dadurch gekennzeichnnet, dass die Position und das Vorhandensein von in einer Oberfläche des Phosphatglaskörpers eingebrachte trichterförmige Vertiefungen die Codierung sind.

4. Verfahren zur Herstellung eines Dosimeters nach Patentanspruch 1, **dadurch gekennzeichnet, dass** mindestens eine Oberfläche des Phosphatglaskörpers mit einer optisch dichten Schicht versehen wird, dass Teile dieser Schicht gezielt so abgetragen werden, dass punkt- und/oder balkenförmige eine Codierung darstellende Flächen aus der optisch dichten Schicht entstehen und dass Metallionen oder Metallatome mindestens einer Sorte durch Ionenimplantation in den Phosphatglaskörper eingebracht werden.

5. Verfahren zur Herstellung eines Dosimeters nach Patentanspruch 1, **dadurch gekennzeichnet, dass** in einem Bereich mindestens einer Oberfläche des Phosphatglaskörpers durch energiereiche Strahlen mehrere trichter- und/oder grabenförmige Vertiefungen als Codierung eingeschmolzen werden und dass Metallionen oder Metallatome mindestens einer Sorte durch Ionenimplantation in den Phosphatglaskörpers eingebracht werden.

## Claims

1. A dosimeter for capturing radiation utilizing radio-photo luminescence with an identification consisting of a phosphate glass body located in a holder or housing, with metal atoms or metal ions, placed inside the phosphate glass body, that produce fluorescence centers in at least one region of said phosphate glass body , **characterized**
**in that** at least one region of the phosphate glass body has a coding that can be determined by exposure to optical rays from a light source and used for identification, said coding being either applied to its surface as a layer comprising a point and/or bar-shaped structure, or cut into its surface as indentations.

2. The dosimeter according to claim 1 wherein the metal atoms or metal ions are ion-implanted.

3. The dosimeter according to claim 1 wherein the coding is constituted by the position and the presence of funnel-shaped indentations cut into a surface of the phosphate glass body.

4. A method for producing a dosimeter according to claim 1 wherein an opaque layer is applied to at least one surface of the phosphate glass body, and wherein portions of this layer are purposefully removed to create point and/or bar-shaped areas that constitute a coding from the opaque layer and metal ions or metal atoms of at least one type are inserted into the phosphate glass body by ion implantation.

5. A method for producing a dosimeter according to claim 1 wherein multiple funnel- and/or groove-shaped indentations are fused as a coding into at least one surface of the phosphate glass body using hard energetic radiation and metal ions or metal atoms of at least one type are inserted into the phosphate glass body by ion implantation.

## Revendications

1. Dosimètre pour identifier et mesurer des rayonnements, en profitant de la luminescence radio-photo, ce dosimètre étant composé d'un corps en verre au phosphate qui, lui, est disposé soit dans un support, soit dans un coffret, où des centres fluorescents placés dans au moins une zone du corps en verre au phosphate produisent des atomes de métal ou des ions métalliques, **caractérisé par le fait qu'**au moins une zone du corps en verre au phosphate est munie d'une couche appliquée à la surface qui présente soit une structure de points et/ou de barres, soit des empreintes, et que cette zone est dotée d'un codage obtenu par rayonnement optique à l'aide d'une source lumineuse, ce codage servant à identifier les différents rayonnements.

2. Dosimètre selon la revendication 1, **caractérisé par le fait que** les atomes de métal ou les ions métalliques sont obtenus par implantation d'ions.

3. Dosimètre selon la revendication 1, **caractérisé par le fait que** la position et les empreintes en forme d'entonnoir situées sur l'une des surfaces du corps en verre au phosphate constituent le codage.

4. Procédé pour fabriquer un dosimètre selon la revendication 1, **caractérisé par le fait qu'**au moins une surface du corps en verre au phosphate est munie d'une couche opaque, qu'une partie de cette couche est érodée de façon sélective et de telle sorte que, à partir de la couche opaque, des surfaces en forme de points et/ou de barres représentant un codage y sont formées, et que des atomes de métal ou des ions métalliques d'au moins un type sont introduits dans le corps en verre au phosphate.

5. Procédé pour fabriquer un dosimètre selon la revendication 1, **caractérisé par le fait que** plusieurs empreintes en forme d'entonnoir et/ou de fossé sont scellées, à l'aide de rayons de haute énergie, dans une zone d'au moins une surface du corps en verre au phosphate, ceci servant de codage, et que des atomes de métal ou des ions métalliques d'au moins un type sont introduits dans le corps en verre au phosphate.
